# EUROPEAN PATENT APPLICATION

(11) **EP 4 847 225 A1**
(43) Date of publication of application: **02.12.2026**
(21) Application number: 24920236.7
(22) Date of filing: 18.06.2024
(51) Int. Cl.: B29C 31/08, B65G 15/08, B65G 15/58, B65G 43/00

(54) **METHOD FOR SUPPLYING GRANULAR MOLDING MATERIAL CONTAINING CARBON FIBERS, METHOD FOR MANUFACTURING RESIN SHEET CONTAINING CARBON FIBERS, AND DEVICE FOR MANUFACTURING RESIN SHEET CONTAINING CARBON FIBERS**

(30) Priority: 26.01.2024 JP 2024010347
(71) Applicant: Mitsubishi Chemical Corporation, Tokyo 100-8251 (JP)
(72) Inventor: MIYAUCHI, Akira, Tokyo 100-8251 (JP); IKEDA, Masashi, Tokyo 100-8251 (JP); SAMEJIMA, Tadao, Tokyo 100-8251 (JP); MAENO, Kazuhiro, Tokyo 100-8251 (JP)
(74) Representative: Hoffmann Eitle
(86) International application number: PCT/JP2024/022026
(87) International publication number: WO 2025/158686

(57) **Abstract**

A method for continuously supplying a granular molding material containing carbon fibers, the method including conveying the granular molding material by a first belt conveyor to a discharge end of the first belt conveyor, the first belt conveyor including a conveyor belt and being provided with an upward slope portion, the conveyor belt having a conveying surface that is an uneven surface. A method for manufacturing a resin sheet containing carbon fibers, the method including: a first step of continuously supplying a granular molding material containing carbon fibers to a double belt press; and a second step of forming a sheet by fusing particles included in the granular molding material by the double belt press, the first step including conveying the granular molding material by a first belt conveyor to a discharge end of the first belt conveyor, the first belt conveyor including a conveyor belt and being provided with an upward slope portion, the conveyor belt having a conveying surface that is an uneven surface.

## Description

### Technical Field

The present invention mainly relates to a method for supplying a granular molding material containing carbon fibers, a method for manufacturing a resin sheet containing carbon fibers, and a device for manufacturing a resin sheet containing carbon fibers.

### Background Art

As a molding material used for manufacturing a carbon fiber reinforced polymer (CFRP) product by compression molding, a granular molding material containing carbon fibers has been proposed (Patent Documents 1 to 3).

Patent Documents 1 and 2 further disclose that a resin sheet usable as a molding material for a CFRP product can be manufactured by fusing particles constituting such a granular molding material to each other. Patent Document 3 describes that a granular molding material is made from a plurality of inorganic fibers, a plurality of organic fibers, and an organic binder.

### Citation List

### Patent Literature

Patent Document 1: WO 2007/020910
Patent Document 2: WO 2023/167102
Patent Document 3: JP 2023-144177 A

### Summary of Invention

### Technical Problem

FIG. 1 of Patent Document 2 illustrates a method for continuously manufacturing a resin sheet obtained by fusing particles constituting a granular molding material containing carbon fibers to each other. In order to obtain a resin sheet having a uniform mass per unit length by this method, it is required to continuously supply a constant amount of the granular molding material onto a running film.

A main object of the present invention is to provide a technique for supplying a granular molding material containing carbon fibers, which can be preferably used in continuously manufacturing a resin sheet obtained by fusing particles constituting the granular molding material containing carbon fibers to each other, a method for manufacturing a resin sheet containing carbon fibers using the technique, and a device for manufacturing a resin sheet containing carbon fibers using the technique. In the present specification, issues to be solved by each embodiment of the present invention may be disclosed explicitly or implicitly.

### Solution to Problem

According to an aspect of the present invention, a method for continuously supplying a granular molding material containing carbon fibers is provided, the method including conveying the granular molding material by a first belt conveyor to a discharge end of the first belt conveyor, the first belt conveyor including a conveyor belt and being provided with an upward slope portion, the conveyor belt having a conveying surface that is an uneven surface.

According to another aspect of the present invention, a method for manufacturing a resin sheet containing carbon fibers is provided, the method including: a first step of continuously supplying a granular molding material containing carbon fibers to a double belt press; and a second step of forming a sheet by fusing particles included in the granular molding material by the double belt press, the first step including conveying the granular molding material by a first belt conveyor to a discharge end of the first belt conveyor, the first belt conveyor including a conveyor belt and being provided with an upward slope portion, the conveyor belt having a conveying surface that is an uneven surface.

According to still another aspect of the present invention, a device for manufacturing a resin sheet containing carbon fibers is provided, the device including: a double belt press configured to form a sheet by fusing particles included in a granular molding material containing carbon fibers; and a first belt conveyor configured to supply the granular molding material to the double belt press, the first belt conveyor including a conveyor belt and being provided with an upward slope portion, the conveyor belt having a conveying surface that is an uneven surface.

### Advantageous Effects of Invention

According to an aspect of the present invention, there is provided a technique for supplying a granular molding material, which can be preferably used in continuously manufacturing a resin sheet obtained by fusing particles constituting a granular molding material containing carbon fibers to each other.

### Brief Description of Drawings

FIG. 1 is a schematic diagram illustrating an example of a device for manufacturing a resin sheet containing carbon fibers.
FIG. 2 is a schematic diagram illustrating a part of a cross-section obtained by cutting a conveyor belt perpendicularly to a width direction.
FIG. 3 is a side view illustrating a part of a spiked lattice, that is, a schematic diagram illustrating a part of the spiked lattice as viewed from a width direction.
FIG. 4 is a schematic diagram illustrating lattices constituted by rods.

### Description of Embodiments

### 1. Granular Molding Material Containing Carbon Fibers

A granular molding material containing carbon fibers is a granular material that can be used as a molding material for a CFRP product, and is particularly a granular material that can be used as a molding material when a CFRP product is manufactured by compression molding.

Hereinafter, for convenience, the "granular molding material containing carbon fibers" may be simply referred to as a "granular molding material". In addition, hereinafter, when a "granular molding material" is simply referred to, it means a "granular molding material containing carbon fibers" unless otherwise specified.

### 1.1. Example of Granular Molding Material

The granular molding material is roughly classified into a thermoplastic granular molding material and a thermosetting granular molding material.

The thermoplastic granular molding material contains at least a thermoplastic polymer as a component other than the carbon fibers. The content of the thermoplastic polymer is usually 10 mass% or more, preferably 20 mass% or more, and more preferably 30 mass% or more, with respect to the total mass of the granular molding material. The content of the thermoplastic polymer is preferably 80 mass% or less, more preferably 70 mass% or less, and still more preferably 65 mass% or less.

The thermosetting granular molding material contains at least a thermosetting resin and a curing agent therefor as components other than the carbon fibers. The content of the thermosetting resin is usually 10 mass% or more, preferably 20 mass% or more, and more preferably 30 mass% or more, with respect to the total mass of the granular molding material. The content of the thermosetting resin is preferably 80 mass% or less, more preferably 70 mass% or less, and still more preferably 65 mass% or less.

### (1) Chopped Carbon Fiber Tow Prepreg

An example of particles that can constitute the granular molding material is chopped carbon fiber tow prepreg.

The chopped carbon fiber tow prepreg is carbon fiber prepreg obtained by cutting continuous carbon fiber tow impregnated with a resin matrix such that the fiber length falls within a range from 5 mm to 100 mm, for example. The resin matrix may be thermosetting or thermoplastic.

In a case where the resin matrix of the chopped carbon fiber tow prepreg is thermoplastic, examples of the polymer that may be contained in the resin matrix include polypropylene, polysulfone, polyethersulfone, polyetherketone, polyetheretherketone, aromatic polyamide, aliphatic polyamide, aromatic polyesters such as polybutylene terephthalate and polyethylene terephthalate, aromatic polycarbonate, polyetherimide, polyarylene oxide, polyarylene sulfide, thermoplastic polyimide, polyamideimide, polyethylene, ethylene-vinyl alcohol copolymer, and acrylonitrile butadiene styrene, and also include linear polymer of bifunctional epoxy compound. The resin matrix may contain two or more polymers.

In the chopped carbon fiber tow prepreg including a thermoplastic resin matrix, a fiber volume content is preferably 20 to 50%. However, the fiber volume content is not limited to falling within this range.

Among the "chopped strand prepregs" described in Patent Document 1, one containing carbon fibers as reinforcing fibers is a kind of the chopped carbon fiber tow prepreg referred to in the present specification.

In a case where the resin matrix of the chopped carbon fiber tow prepreg is thermosetting, the resin matrix contains a thermosetting resin and a curing agent therefor. Examples of the thermosetting resin include unsaturated polyester resin, vinyl ester resin, cyanate resin, and epoxy resin.

In the chopped carbon fiber tow prepreg including the thermosetting resin matrix, a fiber volume content is preferably 50 to 75%. However, the fiber volume content is not limited to falling within this range.

### (2) Impregnated Carbon Fiber Agglomerate

Another example of particles that can constitute the granular molding material is a carbon fiber agglomerate impregnated with a thermosetting resin matrix. In the present specification, such carbon fiber agglomerate is referred to as an "impregnated carbon fiber agglomerate".

The impregnated carbon fiber agglomerate can be formed by mixing cotton-like carbon fibers and a liquid composition at a temperature lower than the curing start temperature of the liquid composition, for example, in a ratio of 25 to 150 parts by mass of the liquid composition with respect to 100 parts by mass of the cotton-like carbon fibers. The viscosity of the liquid composition is preferably 10 Pa·s or less at the time of mixing with the cotton-like carbon fibers.

The carbon fiber agglomerate is formed due to the agglomeration of fiber filaments by a capillary force generated by the presence of the liquid composition. The liquid composition remains as a resin matrix in the formed carbon fiber agglomerate. Thickening or coagulation of the liquid composition may occur after the carbon fiber agglomerate is formed.

The liquid composition contains a thermosetting resin and a curing agent therefor. Examples of the thermosetting resin include unsaturated polyester resin, vinyl ester resin, cyanate resin, and epoxy resin.

Examples of optional components that may be contained in the liquid composition include a reactive diluent, a thickener, a polymerization inhibitor, a shrinkage reducing agent, a flame retardant, an antifoaming agent, an antioxidant, an internal mold release agent, a colorant, a modifier (e.g., rubber, elastomer, or thermoplastic resin), and an antibacterial agent.

In the impregnated carbon fiber agglomerate, all or almost all of the contained fiber filaments may be agglomerated so as to be parallel to each other. In other words, all or almost all of the contained fiber filaments may form a bundle.

The "carbon fiber bundle composite" described in Patent Document 1 is a type of the impregnated carbon fiber agglomerate referred to in the present specification.

### (3) Carbon Fiber-Containing Fiber Agglomerate

Still another example of particles that can constitute the granular molding material is a fiber agglomerate containing carbon fibers, thermoplastic polymer fibers, and a binder. In the present specification, such a fiber agglomerate is referred to as a "carbon fiber-containing fiber agglomerate".

The carbon fiber-containing fiber agglomerate can be obtained by mixing cotton-like carbon fibers, thermoplastic polymer fibers, and a binder-containing liquid at a ratio of, for example, 25 to 150 parts by mass of the binder-containing liquid with respect to 100 parts by mass of the total amount of the cotton-like carbon fibers and the thermoplastic polymer fibers to form a wet fiber agglomerate, and then drying the wet fiber agglomerate.

The fiber agglomerate is formed due to the agglomeration of fiber filaments by a capillary force generated by the presence of the binder-containing liquid. The binder-containing liquid is a liquid in which the binder is dispersed and/or dissolved. The binder-containing liquid is preferably water in which the binder is dispersed and/or dissolved.

Examples of the polymer that can be contained in the thermoplastic polymer fibers include polypropylene, polysulfone, polyethersulfone, polyetherketone, polyetheretherketone, aromatic polyamide, aliphatic polyamide, aromatic polyesters such as polybutylene terephthalate and polyethylene terephthalate, aromatic polycarbonate, polyetherimide, polyarylene oxide, polyarylene sulfide, thermoplastic polyimide, polyamideimide, polyethylene, ethylene-vinyl alcohol copolymer, and acrylonitrile butadiene styrene, and also include linear polymer of bifunctional epoxy compound.

One type of thermoplastic polymer fiber may be used alone or a plurality of types of thermoplastic polymer fibers may be used in combination.

The filament length of the thermoplastic polymer fibers falls within a range from 5 to 100 mm, for example. The filament length of the thermoplastic polymer fibers preferably does not exceed the length of the longest carbon fiber filament included in the cotton-like carbon fibers.

The binder has a function of binding the fiber filaments to each other so that the carbon fiber-containing fiber agglomerate can maintain its shape. A preferred example of the binder is a sizing agent applied to a general PAN-based carbon fiber tow.

Examples of materials that may be contained in the binder include epoxy resin, urethane-modified epoxy resin, polyester resin, phenolic resin, polyamide, polyurethane, polyvinyl alcohol, polyvinylpyrrolidone, carboxymethylcellulose, sodium alginate, and polyacrylamide.

The ratio of the carbon fibers to the total amount of the carbon fibers and the thermoplastic polymer fibers included in the carbon fiber-containing fiber agglomerate is preferably 20 to 60 mass%. However, the ratio of the carbon fibers to the total amount of the carbon fibers and the thermoplastic polymer fibers is not limited to being in this range.

In the carbon fiber-containing fiber agglomerate, all or almost all of the contained fiber filaments may be agglomerated so as to be parallel to each other. In other words, all or almost all of the contained fiber filaments may form a bundle.

Among "the self-assembled fiber bundles consisting of a plurality of inorganic fibers, a plurality of organic fibers, and an organic binder" described in Patent Document 3, a self-assembled fiber bundle containing carbon fibers and thermoplastic polymer fibers as the inorganic fibers and as the organic fibers, respectively, is a type of the carbon fiber-containing fiber agglomerate referred to in the present specification.

### 1.2. Cotton-Like Carbon Fibers

Preferred examples of the cotton-like carbon fibers which can be used for manufacturing the impregnated carbon fiber agglomerate and the carbon fiber-containing fiber agglomerate will be described below.

The purest cotton-like carbon fiber consists only of a plurality of carbon fiber filaments which are not bound to each other. However, impurities may be mixed in the cotton-like carbon fibers used for manufacturing the impregnated carbon fiber agglomerate or the carbon fiber-containing fiber agglomerate to the extent that no problem occurs. Examples of the impurities include a fine carbon fiber bundle in which a plurality of carbon fiber filaments are bound to each other, and fiber filaments other than the carbon fiber filaments such as glass fiber filaments, for example.

The cotton-like carbon fibers preferably include carbon fiber filaments having a length of 5 mm or more, more preferably include carbon fiber filaments having a length of 10 mm or more, and still more preferably include carbon fiber filaments having a length of 20 mm or more.

The cotton-like carbon fibers preferably include carbon fiber filaments having a length of 100 mm or less, more preferably include carbon fiber filaments having a length of 60 mm or less, still more preferably include carbon fiber filaments having a length of 40 mm or less, and far more preferably include carbon fiber filaments having a length of 30 mm or less. In one example, all of the carbon fiber filaments included in the cotton-like carbon fibers may have a length of 100 mm or less, further 60 mm or less, further 40 mm or less, or further 30 mm or less.

### 1.3. Recycled Carbon Fibers

The granular molding material may include recycled carbon fibers recovered from CFRP or carbon fiber prepreg.

A method for removing a resin matrix from CFRP or the carbon fiber prepreg to obtain recycled carbon fibers is not limited, and any method including a thermal decomposition method, a method using a supercritical fluid, a method using superheated steam, a chemical decomposition method, an electrolytic oxidation method, and a method using active oxygen can be used.

In order to obtain cotton-like recycled carbon fibers in which carbon fiber filaments are not bound to each other, it is effective to remove most of a resin matrix and then remove residual carbon by heating under an oxidizing atmosphere.

In one example, recycled carbon fibers including carbon fiber filaments bound to each other by residual carbon may be mechanically disentangled into a cotton-like state.

Recycled carbon fibers obtained from CFRP molded from a sheet molding compound (SMC) and offcuts of SMC often include only carbon fibers having a filament length of 60 mm or less, and can be used for manufacturing an impregnated carbon fiber agglomerate and a carbon fiber-containing fiber agglomerate without being further cut.

Recycled carbon fibers obtained from a CFRP product manufactured using UD prepreg, fabric prepreg, or tow prepreg, or recycled carbon fibers obtained from a CFRP product manufactured by a RTM method, a VaRTM method, a filament winding method, or pultrusion method, are cut as appropriate such that carbon fiber filaments of a length suitable for manufacturing an impregnated carbon fiber agglomerate and a carbon fiber-containing fiber agglomerate are formed.

In a method of crushing a CFRP product using any of a one-axis crusher, a two-axis crusher, and a four-axis crusher and then removing a polymer matrix, the carbon fibers included in the CFRP product are cut when the CFRP product is crushed. When the size of a crushed piece generated by the crushing is 60 mm or less in all directions, almost all the carbon fibers included in the crushed piece are cut to have a filament length of 60 mm or less. By sieving crushed pieces to remove those having a size of less than 5 mm in all directions and then removing a polymer matrix, recycled carbon fibers having a reduced content of carbon fibers having a filament length of less than 5 mm can be obtained.

### 1.4. Shapes of Particles

The granular molding material may include particles having an elongated shape such as a strip, a needle, a spindle, or a wire, for example.

The shape of the above-described chopped carbon fiber tow prepreg is often a strip shape.

The impregnated carbon fiber agglomerate and the carbon fiber-containing fiber agglomerate described above have a shape of a needle, spindle, or a wire when all or almost all of contained fiber filaments are agglomerated so as to be parallel to each other. Such an aggregation is likely to occur when the carbon fibers contain fiber filaments having a length of 5 mm or more.

A particle having an elongated shape tends to curve along its longitudinal direction as its length increases. This tendency becomes strong when the length of particles is 20 mm or more, and particularly when the length is 30 mm or more.

The granular molding material containing particles having an elongated shape is likely to cause a bridge phenomenon, making it difficult to continuously supply a constant amount of the granular molding material using a hopper feeder. This tendency becomes more pronounced as the length of such particles increases.

The granular molding material containing particles having an elongated shape and curved along their longitudinal directions also makes it difficult to supply a constant amount of the granular molding material using a screw conveyor or a vibration conveyor. This is because when the granular molding material is compressed inside the feeder, the particles curved along their longitudinal directions are likely to be entangled with each other.

Based on the above, supplying the granular molding material using the method according to the embodiment of the present invention is particularly advantageous in a case where the granular molding material contains particles having an elongated shape. Supplying the granular molding material using the method according to the embodiment of the present invention is more advantageous in a case where at least some of such particles are curved along their longitudinal directions. That is, supplying the granular molding material using the method according to the embodiment of the present invention is even more advantageous, particularly, in a case where particles having an elongated shape and having a length of 20 mm or more are contained in the granular molding material.

### 1.5. Others

The granular molding material need not be constituted only by particles of the same type. Thus, a granular molding material according to one example may contain chopped carbon fiber tow prepreg and impregnated carbon fiber agglomerate.

### 2. Method for Supplying Granular Molding Material Containing Carbon Fibers

One embodiment of the present invention relates to a method for supplying a granular molding material containing carbon fibers. Hereinafter, this method will be described in detail by taking a case where the method is applied to the manufacturing of a resin sheet containing carbon fibers as an example.

Hereinafter, the "method for supplying a granular molding material containing carbon fibers" may be simply referred to as a "supply method". Hereinafter, when the "supply method" is simply referred to, it means the "method for supplying a granular molding material containing carbon fibers" unless otherwise specified.

Hereinafter, the "resin sheet containing carbon fibers" may be simply referred to as a "resin sheet". Hereinafter, when the "resin sheet" is simply referred to, it means the "resin sheet containing carbon fibers" unless otherwise specified.

### 2.1. Resin Sheet Manufacturing Device

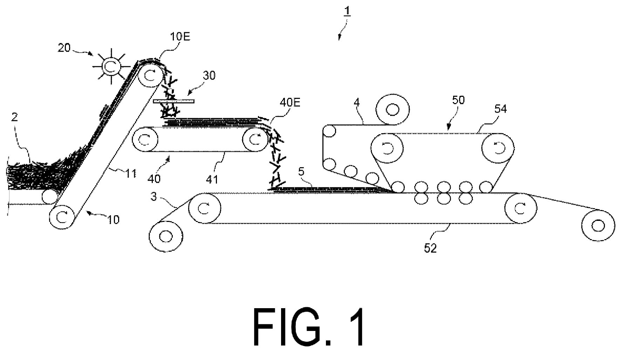

An example of a manufacturing device that can be preferably used in manufacturing a resin sheet using the supply method according to the embodiment is illustrated in FIG. 1.

Referring to FIG. 1, a resin sheet manufacturing device 1 includes a first belt conveyor 10, a scraping roller 20, a rod 30, a second belt conveyor 40, and a double belt press 50.

The first belt conveyor 10 is an example of a belt conveyor provided with an upward slope portion, and is an inclined belt conveyor including only the upward slope portion. In a modification example, the first belt conveyor 10 may include a horizontal portion on one or both of the upstream side and the downstream side of the upward slope portion.

The first belt conveyor 10 has a conveyor belt 11 with a conveying surface 11a, that is, the surface on which a granular molding material 2 is placed, which is an uneven surface. This is to prevent the granular molding material 2 to be conveyed from sliding down on the conveying surface 11a of the conveyor belt 11 at the upward slope portion of the first belt conveyor 10.

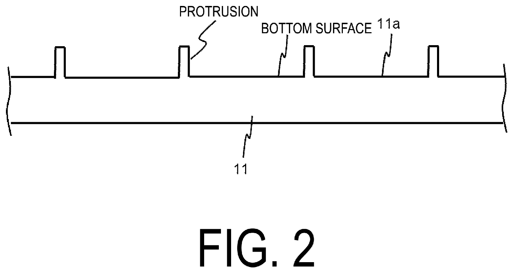

The conveying surface 11a of the conveyor belt 11 may be an uneven surface including recesses having bottom surfaces and protrusions protruding from the bottom surfaces, as illustrated in the cross-sectional view of FIG. 2, for example. In that case, the proportion of the protrusions in a plan view of the uneven surface is preferably 50% or less, more preferably 10% or less, in terms of area.

In one example, the protrusions in the uneven surface may be walls perpendicular to the bottom surfaces of the recesses. Such walls may be parallel to the width direction of the conveyor belt.

In another example, the protrusions in the uneven surface may have a columnar shape. The protrusions having a columnar shape may be perpendicular to the bottom surfaces of the recesses, or may be inclined toward the running direction of the first conveyor belt.

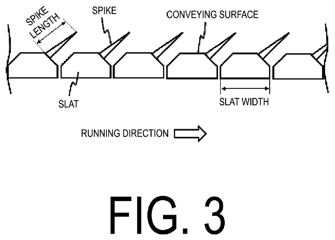

In one preferred example, the conveyor belt 11 may be a spiked lattice. FIG. 3 is a side view of an example of the spiked lattice. In the spiked lattice, a slat width is preferably 5 to 30 mm and a spike length is preferably 5 to 20 mm. In the conveyor belt that is the spiked lattice, a spiked surface is the conveying surface.

The scraping roller 20 is an example of a scraper configured to scrape off a part of the granular molding material 2 conveyed by the first belt conveyor 10, and is optionally provided in the middle of or at the upper end of the upward slope portion of the first belt conveyor 10. The scraping roller 20 includes a rotation shaft parallel to a T direction of the first belt conveyor 10 and a cylinder whose central axis is in line with the rotation shaft, and a plurality of blades each of which is parallel to the rotation shaft are disposed on an outer peripheral surface of the cylinder.

Here, the T direction of the belt conveyor means a horizontal direction orthogonal to the conveying direction of the belt conveyor. The T direction of the belt conveyor usually coincides with the width direction of the conveyor belt of the belt conveyor.

In a case where the conveyor belt is a spiked lattice, the longitudinal direction of a slat and the T direction of the belt conveyor coincide with each other.

The rod 30 is an example of a disperser configured to disperse the granular molding material 2 dropping from a discharge end 10E of the first belt conveyor 10, and is optionally disposed below the discharge end 10E.

The rod 30 is a rod supported such that the longitudinal direction thereof is horizontal or oblique, and the cross-sectional shape thereof is not limited to a circle, and may be a polygon such as a triangle, a square, or a hexagon.

The rod 30 is caused to perform a reciprocating motion or a circular motion by a drive mechanism (not illustrated).

In a case where the rod 30 performs a reciprocating motion, the direction of the reciprocating motion includes a component inclined with respect to the longitudinal direction of the rod 30 and a horizontal component. In a preferred embodiment, the rod 30 performs a reciprocating motion horizontally along a direction orthogonal to the longitudinal direction thereof.

In a case where the rod 30 performs a circular motion, the direction of the longitudinal direction of the rod 30 is constant, and the track of the circular motion is made not to be parallel to a vertical plane parallel to the longitudinal direction of the rod 30. In a preferred embodiment, the track of the circular motion is horizontal.

Typically, a lattice is formed by a plurality of rods 30. In other words, the plurality of rods 30 are disposed at equal intervals in the same plane.

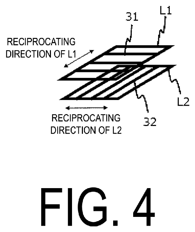

In a preferred example, as illustrated in FIG. 4, a first lattice L1 and a second lattice L2 are disposed so as to vertically overlap each other. The first lattice L1 including a plurality of rods 31 is disposed such that the rods 31 are horizontal and perpendicular to the T direction of the first belt conveyor 10. The second lattice L2 including a plurality of rods 32 is disposed such that the rods 32 are horizontal and parallel to the T direction of the first belt conveyor 10. Either the first lattice L1 or the second lattice L2 may be arranged on the upper side or the lower side.

In dispersing the granular molding material 2 dropping from the discharge end 10E of the first belt conveyor 10, examples of the disperser other than the rod include a grid and a punching metal. The grid may be an expanded metal. The grid and the punching metal are also caused to perform a reciprocating motion or a circular motion by a drive mechanism. In the case of the reciprocating motion, the direction of the motion is preferably horizontal. In the case of the circular motion, the track thereof is preferably horizontal.

The second belt conveyor 40 is a horizontal belt conveyor with no inclined portion in a conveying path. The second belt conveyor 40 is optionally disposed downstream of the first belt conveyor 10. The T direction of the second belt conveyor 40 is the same as the T direction of the first belt conveyor 10.

It is preferable but not essential that the conveying path of the second belt conveyor 40 be horizontal. Even when the second belt conveyor 40 has an inclination, there is no problem as long as the inclination is not so steep that the granular molding material 2 conveyed on a conveyor belt 41 moves by the gravity.

The granular molding material 2 dropping from the discharge end 10E of the first belt conveyor 10 falls onto the second belt conveyor 40 and is conveyed toward a discharge end 40E of the second belt conveyor 40.

A belt running speed v2 of the second belt conveyor 40 is preferably equal to or lower than a belt running speed v1 of the first belt conveyor 10, and more preferably lower than the belt running speed v1 of the first belt conveyor 10.

The discharge end 40E of the second belt conveyor 40 is disposed above the running path of a first carrier film 3 running along the longitudinal direction of the second belt conveyor 40. The granular molding material 2 falls from the discharge end 40E of the second belt conveyor 40 onto the first carrier film 3, and forms a deposition layer 5 on the first carrier film 3.

The width direction of the first carrier film 3 is parallel to the T direction of the second belt conveyor 40. In a region into which the granular molding material 2 falls, the upper surface of the first carrier film 3 is held horizontally.

A running speed v3 of the first carrier film 3 is preferably equal to or lower than the belt running speed v2 of the second belt conveyor 40, and more preferably lower than the belt running speed v2 of the second belt conveyor 40.

In a case where the second belt conveyor 40 is not provided, the granular molding material 2 is dropped from the discharge end 10E of the first belt conveyor 10 onto the first carrier film 3 to form the deposition layer 5. In this case, the running speed v3 of the first carrier film 3 is preferably equal to or lower than the belt running speed v1 of the first belt conveyor 10, and more preferably lower than the belt running speed v1 of the first belt conveyor 10.

After the deposition layer 5 is formed on the first carrier film 3, a second carrier film 4 is stacked on the first carrier film 3, so that the deposition layer 5 is sandwiched between the first carrier film 3 and the second carrier film 4.

The double belt press 50 includes a lower conveyor belt 52 and an upper conveyor belt 54, and also includes rolls for sandwiching and compressing the deposition layer 5 sandwiched between the two carrier films 3 and 4 together with the lower conveyor belt 52 and the upper conveyor belt 54.

At least some of the rolls of the double belt press 50 may be heating rolls. At least some of the rolls of the double belt press 50 may be cooling rolls.

The resin sheet manufacturing device may be provided with a far-infrared heater for heating the deposition layer 5 before the deposition layer 5 is compressed by the double belt press 50.

### 2.2. Resin Sheet Manufacturing Method

Next, a resin sheet manufacturing method using the supply method according to the embodiment will be described by taking, as an example, a case where the resin sheet manufacturing device 1 illustrated in FIG. 1 is used.

In this method, first, the granular molding material 2 is supplied to a lower portion of the first belt conveyor 10. A means of supplying the granular molding material 2 to the lower portion of the first belt conveyor 10 may include any conveying device including a belt conveyor, a screw conveyor, and a vibration conveyor.

The granular molding material 2 supplied to the lower portion of the first belt conveyor 10 is conveyed by the first belt conveyor 10 toward the discharge end 10E which is the end of the upward slope portion of the first belt conveyor 10. The amount of the granular molding material 2 that reaches the discharge end 10E of the first belt conveyor 10 per unit time is restricted by the inclination of the upward slope portion being sufficiently steep. This is because the amount of the granular molding material 2 passing through the upward slope portion while remaining on the conveying surface 11a of the conveyor belt 11 is restricted. The amount of the granular molding material 2 that can remain on the conveying surface 11a of the conveyor belt 11 in the upward slope portion is determined by a balance between the gravity and a friction force acting between the particles included in the granular molding material 2.

Since there is an upper limit of the amount of the granular molding material 2 that can reach the discharge end 10E of the first belt conveyor 10, the amount of the granular molding material 2 discharged from the discharge end 10E of the first belt conveyor 10 per unit time becomes constant. That is, it is possible to supply a constant amount of the granular molding material 2 to the downstream side of the first belt conveyor 10.

By rotating the scraping roller 20 which is optionally disposed, variations in the amount of the granular molding material 2 reaching the discharge end 10E of the first belt conveyor 10 per unit time can be further reduced. This is because when the height of the granular molding material 2 on the first conveyor belt 11 exceeds a clearance between the scraping roller 20 and the first conveyor belt 11, a part of the granular molding material 2 is scraped off by the scraping roller 20.

The rod 30, which is optionally disposed, performs a reciprocating motion horizontally along a direction orthogonal to the longitudinal direction of the rod 30, so that the granular molding material 2 can uniformly fall onto the second belt conveyor 20.

When the belt running speed v2 of the second belt conveyor 40 is lower than the belt running speed v1 of the first belt conveyor 10, variations in the amount of the granular molding material 2 conveyed by the second belt conveyor 40 per unit time can be smaller than variations in the amount of the granular molding material 2 discharged from the first belt conveyor 10 per unit time.

The granular molding material 2 drops from the discharge end 40E of the second belt conveyor 40 onto the first carrier film 3 running below the second belt conveyor 40, and forms the deposition layer 5 on the first carrier film 3.

When the running speed v3 of the first carrier film 3 is lower than the belt running speed v2 of the second belt conveyor 40, variations in the amount of the granular molding material 2 conveyed by the first carrier film 3 per unit time can be smaller than variations in the amount of the granular molding material 2 discharged from the second belt conveyor 40 per unit time. Here, the amount of the granular molding material 2 carried by the first carrier film 3 per unit time can be rephrased as the mass of the deposition layer 5 per unit length along the running direction of the first carrier film 3.

The deposition layer 5 is sandwiched between the first carrier film 3 and the second carrier film 4, and then compressed by the double belt press 50. As a result, the particles included in the granular molding material 2 forming the deposition layer 5 are fused to each other, so that a resin sheet is formed. The deposition layer 5 is heated to a temperature at which such fusion is possible. A heater may be a heating roll of the double belt press 50, or may be a far-infrared heater provided to the resin sheet manufacturing device.

In a case where the particles constituting the granular molding material 2 are the impregnated carbon fiber agglomerate and the thermosetting resin matrix included in the particles is a liquid having a viscosity of, for example, less than 1000 Pa·s at 25°C, heating is not necessarily required to fuse the particles to each other.

The formed resin sheet is wound around a bobbin while being sandwiched between the first carrier film 3 and the second carrier film 4. However, winding around the bobbin is not essential. In one example, the formed resin sheet may be folded and accommodated in a container. In another example, the formed resin sheet may be cut into a size that is easy to transport and accommodated in a container.

In a modified embodiment, the second belt conveyor 40 may be omitted, and the granular molding material 2 may drop from the discharge end 10E of the first belt conveyor 10 onto the first carrier film 3 to form the deposition layer 5.

In another modified embodiment, the use of the first carrier film 3 and the second carrier film 4 may be omitted. That is, the deposition layer 5 may be directly formed on the lower conveyor belt 52 of the double belt press 50, and the deposition layer 5 may be directly sandwiched between the lower conveyor belt 52 and the upper conveyor belt 54.

### 2.3. Resin Sheet

By using the method described in 2.2. described above, a resin sheet in which variations in the weight per unit length along an M direction are suppressed can be obtained. The M direction is a direction parallel to the movement direction of the material of the resin sheet when the material passes through the double belt press (the running direction of the conveyor belt of the double belt press).

The thickness of the resin sheet may be in a range from 1 mm to 5 mm, for example. However, the thickness of the resin sheet is not limited to being in this range.

The width of the resin sheet (a dimension in a direction orthogonal to the M direction) may be in a range from 0.3 m to 3 m, for example. However, the width of the resin sheet is not limited to being in this range.

The resin sheet is used as a molding material (intermediate material) when a CFRP product is manufactured by, for example, a compression molding method.

The CFRP product molded using the resin sheet is used in a wide variety of applications including parts used in an aircraft, an automobile, a ship, and other various transportation equipment, sports equipment, leisure equipment, and the like.

### 3. Summary of Embodiments

Embodiments of the present invention include the following items.

[Item 1] A method for continuously supplying a granular molding material containing carbon fibers, the method including conveying the granular molding material by a first belt conveyor to a discharge end of the first belt conveyor, the first belt conveyor including a conveyor belt and being provided with an upward slope portion, the conveyor belt having a conveying surface that is an uneven surface.

[Item 2] The method according to Item 1, wherein the conveying surface is an uneven surface including a recess with a bottom surface and a protrusion protruding from the bottom surface, and when the uneven surface is viewed in a plan view, a proportion of the protrusion in the uneven surface is 50% or less, and preferably 10% or less, in terms of area.

[Item 3] The method according to Item 1, wherein the conveyor belt is a spiked lattice.

[Item 4] The method according to any one of Items 1 to 3, wherein an amount of the granular molding material that reaches the discharge end of the first belt conveyor per unit time is restricted by an inclination of the upward slope portion being steep.

[Item 5] The method according to any one of Items 1 to 4, further including scraping off a part of the granular molding material conveyed by the first belt conveyor using a scraper in a middle of or at an upper end of the upward slope portion.

[Item 6] The method according to Item 5, wherein the scraper includes a scraping roller, and the scraping roller includes a rotation shaft parallel to a T direction of the first belt conveyor, a cylinder portion whose central axis is in line with the rotation shaft, and a plurality of blades disposed on an outer peripheral surface of the cylinder portion, each of the plurality of blades being parallel to the rotation shaft.

[Item 7] The method according to any one of Items 1 to 6, further including dropping the granular molding material from the discharge end of the first belt conveyor.

[Item 8] The method according to any one of Items 1 to 7, wherein a disperser configured to disperse the granular molding material by performing a reciprocating motion or a circular motion is disposed below the discharge end of the first belt conveyor.

[Item 9] The method according to Item 8, wherein the disperser includes a rod, and the rod performs a reciprocating motion horizontally along a direction orthogonal to a longitudinal direction of the rod.

[Item 10] The method according to any one of Items 1 to 9, further including dropping the granular molding material from the discharge end of the first belt conveyor onto a second belt conveyor having a T direction same as a T direction of the first belt conveyor and preferably being a horizontal belt conveyor.

[Item 11] The method according to Item 10, wherein a belt running speed of the second belt conveyor is lower than a belt running speed of the first belt conveyor.

[Item 12] The method according to any one of Items 1 to 11, wherein the granular molding material includes elongate-shaped particles.

[Item 13] The method according to Item 12, wherein the elongate-shaped particles have a shape of a strip, a needle, a spindle, or a wire.

[Item 14] The method according to Item 12 or 13, wherein the elongated-shaped particles are curved along longitudinal directions thereof.

[Item 15] The method according to any one of Items 12 to 14, wherein the elongate-shaped particles have a length equal to or longer than 20 mm.

[Item 16] The method according to any one of Items 1 to 11, wherein the granular molding material includes a chopped carbon fiber tow prepreg.

[Item 17] The method according to Item 16, wherein the chopped carbon fiber tow prepreg has a shape of a strip.

[Item 18] The method according to Item 16 or 17, wherein the chopped carbon fiber tow prepreg is curved along a longitudinal direction thereof.

[Item 19] The method according to any one of Items 16 to 18, wherein the chopped carbon fiber tow prepreg has a length equal to or longer than 20 mm.

[Item 20] The method according to any one of Items 1 to 11, wherein the granular molding material includes an impregnated carbon fiber agglomerate, and the impregnated carbon fiber agglomerate is a carbon fiber agglomerate impregnated with a thermosetting resin matrix.

[Item 21] The method according to Item 20, wherein the impregnated carbon fiber agglomerate has an elongated shape which may be a shape of a needle, a spindle, or a wire.

[Item 22] The method according to Item 21, wherein the carbon fiber agglomerate is curved along a longitudinal direction thereof.

[Item 23] The method according to Item 21 or 22, wherein the carbon fiber agglomerate has a length equal to or longer than 20 mm.

[Item 24] The method according to any one of Items 1 to 11, wherein the granular molding material includes a carbon fiber-containing fiber agglomerate, and the carbon fiber-containing fiber agglomerate is a fiber agglomerate containing carbon fibers, thermoplastic polymer fibers, and a binder.

[Item 25] The method according to Item 24, wherein the carbon fiber-containing fiber agglomerate has an elongated shape which may be a shape of a needle, a spindle, or a wire.

[Item 26] The method according to Item 25, wherein the carbon fiber-containing fiber agglomerate is curved along a longitudinal direction thereof.

[Item 27] The method according to Item 25 or 26, wherein the carbon fiber-containing fiber agglomerate has a length equal to or longer than 20 mm.

[Item 28] A method for manufacturing a resin sheet containing carbon fibers, the method including: a first step of continuously supplying a granular molding material containing carbon fibers to a double belt press; and a second step of forming a sheet by fusing particles included in the granular molding material by the double belt press, the first step including conveying the granular molding material by a first belt conveyor to a discharge end of the first belt conveyor, the first belt conveyor including a conveyor belt and being provided with an upward slope portion, the conveyor belt having a conveying surface that is an uneven surface.

[Item 29] The method according to Item 28, wherein the conveying surface is an uneven surface including a recess with a bottom surface and a protrusion protruding from the bottom surface, and when the uneven surface is viewed in a plan view, a proportion of the protrusion in the uneven surface is 50% or less, and preferably 10% or less, in terms of area.

[Item 30] The method according to Item 28, wherein the conveyor belt is a spiked lattice.

[Item 31] The method according to any one of Items 28 to 30, wherein an amount of the granular molding material that reaches the discharge end of the first belt conveyor per unit time is restricted by an inclination of the upward slope portion being steep.

[Item 32] The method according to any one of Items 28 to 31, further including scraping off a part of the granular molding material conveyed by the first belt conveyor using a scraper in a middle of or at an upper end of the upward slope portion.

[Item 33] The method according to Item 32, wherein the scraper includes a scraping roller, and the scraping roller includes a rotation shaft parallel to a T direction of the first belt conveyor, a cylinder portion whose central axis is in line with the rotation shaft, and a plurality of blades disposed on an outer peripheral surface of the cylinder portion, each of the plurality of blades being parallel to the rotation shaft.

[Item 34] The method according to any one of Items 28 to 33, further including dropping the granular molding material from the discharge end of the first belt conveyor.

[Item 35] The method according to any one of Items 28 to 34, wherein a disperser configured to disperse the granular molding material by performing a reciprocating motion or a circular motion is disposed below the discharge end of the first belt conveyor.

[Item 36] The method according to Item 35, wherein the disperser includes a rod, and the rod performs a reciprocating motion horizontally along a direction orthogonal to a longitudinal direction of the rod.

[Item 37] The method according to any one of Items 28 to 36, further including dropping the granular molding material from the discharge end of the first belt conveyor onto a second belt conveyor having a T direction same as a T direction of the first belt conveyor and preferably being a horizontal belt conveyor.

[Item 38] The method according to Item 37, wherein a belt running speed of the second belt conveyor is lower than a belt running speed of the first belt conveyor.

[Item 39] The method according to any one of Items 28 to 38, wherein the granular molding material includes elongate-shaped particles.

[Item 40] The method according to Item 39, wherein the elongate-shaped particles have a shape of a strip, a needle, a spindle, or a wire.

[Item 41] The method according to Item 39 or 40, wherein the elongated-shaped particles are curved along longitudinal directions thereof.

[Item 42] The method according to any one of Items 39 to 41, wherein the elongate-shaped particles have a length equal to or longer than 20 mm.

[Item 43] The method according to any one of Items 28 to 38, wherein the granular molding material includes a chopped carbon fiber tow prepreg.

[Item 44] The method according to Item 43, wherein the chopped carbon fiber tow prepreg has a shape of a strip.

[Item 45] The method according to Item 43 or 44, wherein the chopped carbon fiber tow prepreg is curved along a longitudinal direction thereof.

[Item 46] The method according to any one of Items 43 to 45, wherein the chopped carbon fiber tow prepreg has a length equal to or longer than 20 mm.

[Item 47] The method according to any one of Items 28 to 38, wherein the granular molding material includes an impregnated carbon fiber agglomerate, and the impregnated carbon fiber agglomerate is a carbon fiber agglomerate impregnated with a thermosetting resin matrix.

[Item 48] The method according to Item 47, wherein the impregnated carbon fiber agglomerate has an elongated shape which may be a shape of a needle, a spindle, or a wire.

[Item 49] The method according to Item 48, wherein the carbon fiber agglomerate is curved along a longitudinal direction thereof.

[Item 50] The method according to Item 48 or 49, wherein the carbon fiber agglomerate has a length equal to or longer than 20 mm.

[Item 51] The method according to any one of Items 28 to 38, wherein the granular molding material includes a carbon fiber-containing fiber agglomerate, and the carbon fiber-containing fiber agglomerate is a fiber agglomerate containing carbon fibers, thermoplastic polymer fibers, and a binder.

[Item 52] The method according to Item 51, wherein the carbon fiber-containing fiber agglomerate has an elongated shape which may be a shape of a needle, a spindle, or a wire.

[Item 53] The method according to Item 52, wherein the carbon fiber-containing fiber agglomerate is curved along a longitudinal direction thereof.

[Item 54] The method according to Item 52 or 53, wherein the carbon fiber-containing fiber agglomerate has a length equal to or longer than 20 mm.

[Item 55] A device for manufacturing a resin sheet containing carbon fibers, the device including: a double belt press configured to form a sheet by fusing particles included in a granular molding material containing carbon fibers; and a first belt conveyor configured to supply the granular molding material to the double belt press, the first belt conveyor including a conveyor belt and being provided with an upward slope portion, the conveyor belt having a conveying surface that is an uneven surface.

[Item 56] The device according to Item 55, wherein the conveying surface is an uneven surface including a recess with a bottom surface and a protrusion protruding from the bottom surface, and when the uneven surface is viewed in a plan view, a proportion of the protrusion in the uneven surface is 50% or less, and preferably 10% or less, in terms of area.

[Item 57] The device according to Item 55, wherein the conveyor belt is a spiked lattice.

[Item 58] The device according to any one of Items 55 to 57, wherein an amount of the granular molding material that reaches a discharge end of the first belt conveyor per unit time is restricted by an inclination of the upward slope portion being steep.

[Item 59] The device according to any one of Items 55 to 58, further including a scraper configured to scrape off a part of the granular molding material conveyed by the first belt conveyor in a middle of or at an upper end of the upward slope portion.

[Item 60] The device according to Item 59, wherein the scraper includes a scraping roller, and the scraping roller includes a rotation shaft parallel to a T direction of the first belt conveyor, a cylinder portion whose central axis is in line with the rotation shaft, and a plurality of blades disposed on an outer peripheral surface of the cylinder portion, each of the plurality of blades being parallel to the rotation shaft.

[Item 61] The device according to any one of Items 55 to 60, wherein a disperser configured to disperse the granular molding material dropping from a discharge end of the first belt conveyor by performing a reciprocating motion or a circular motion is disposed below the discharge end of the first belt conveyor.

[Item 62] The device according to Item 61, wherein the disperser includes a rod, and the rod performs a reciprocating motion horizontally along a direction orthogonal to a longitudinal direction of the rod.

The present invention has been described based on specific embodiments above. However, each embodiment has been presented as an example and does not limit the scope of the present invention. Each embodiment described in the present specification can be changed in various ways within a scope in which the effect of the invention is exhibited, and can be combined, within a practical range, with a feature described in another embodiment.

The present application is based on JP 2024-010347 filed on January 26, 2024, which is incorporated by citation in its entirety.

### Reference Signs List

1 Resin sheet manufacturing device
2 Granular molding material containing carbon fibers
10 First belt conveyor
11 Conveyor belt
11a Conveying surface
20 Scraping roller
30 Rod
40 Second belt conveyor
50 Double belt press

## Claims

1. A method for continuously supplying a granular molding material containing carbon fibers, the method comprising conveying the granular molding material by a first belt conveyor to a discharge end of the first belt conveyor, the first belt conveyor including a conveyor belt and being provided with an upward slope portion, the conveyor belt having a conveying surface that is an uneven surface.

2. The method according to claim 1, wherein
the conveying surface is an uneven surface including a recess with a bottom surface and a protrusion protruding from the bottom surface, and
when the uneven surface is viewed in a plan view, a proportion of the protrusion in the uneven surface is 50% or less, and preferably 10% or less, in terms of area.

3. The method according to claim 1, wherein the conveyor belt is a spiked lattice.

4. The method according to any one of claims 1 to 3, wherein an amount of the granular molding material that reaches the discharge end of the first belt conveyor per unit time is restricted by an inclination of the upward slope portion being steep.

5. The method according to any one of claims 1 to 4, further comprising scraping off a part of the granular molding material conveyed by the first belt conveyor using a scraper in a middle of or at an upper end of the upward slope portion.

6. The method according to claim 5, wherein
the scraper includes a scraping roller, and
the scraping roller includes
a rotation shaft parallel to a T direction of the first belt conveyor,
a cylinder portion whose central axis is in line with the rotation shaft, and
a plurality of blades disposed on an outer peripheral surface of the cylinder portion, each of the plurality of blades being parallel to the rotation shaft.

7. The method according to any one of claim 1 to 6, further comprising dropping the granular molding material from the discharge end of the first belt conveyor.

8. The method according to any one of claims 1 to 7, wherein a disperser configured to disperse the granular molding material by performing a reciprocating motion or a circular motion is disposed below the discharge end of the first belt conveyor.

9. The method according to claim 8, wherein
the disperser includes a rod, and
the rod performs a reciprocating motion horizontally along a direction orthogonal to a longitudinal direction of the rod.

10. The method according to any one of claims 1 to 9, further comprising dropping the granular molding material from the discharge end of the first belt conveyor onto a second belt conveyor having a T direction same as a T direction of the first belt conveyor and preferably being a horizontal belt conveyor.

11. The method according to claim 10, wherein a belt running speed of the second belt conveyor is lower than a belt running speed of the first belt conveyor.

12. The method according to any one of claims 1 to 11, wherein the granular molding material includes elongate-shaped particles.

13. The method according to claim 12, wherein the elongate-shaped particles have a shape of a strip, a needle, a spindle, or a wire.

14. The method according to claim 12 or 13, wherein the elongated-shaped particles are curved along longitudinal directions thereof.

15. The method according to any one of claims 12 to 14, wherein the elongate-shaped particles have a length equal to or longer than 20 mm.

16. The method according to any one of claim 1 to 11, wherein the granular molding material includes a chopped carbon fiber tow prepreg.

17. The method according to claim 16, wherein the chopped carbon fiber tow prepreg has a shape of a strip.

18. The method according to claim 16 or 17, wherein the chopped carbon fiber tow prepreg is curved along a longitudinal direction thereof.

19. The method according to any one of claims 16 to 18, wherein the chopped carbon fiber tow prepreg has a length equal to or longer than 20 mm.

20. The method according to any one of claims 1 to 11, wherein
the granular molding material includes an impregnated carbon fiber agglomerate, and
the impregnated carbon fiber agglomerate is a carbon fiber agglomerate impregnated with a thermosetting resin matrix.

21. The method according to claim 20, wherein the impregnated carbon fiber agglomerate has an elongated shape which may be a shape of a needle, a spindle, or a wire.

22. The method according to claim 21, wherein the carbon fiber agglomerate is curved along a longitudinal direction thereof.

23. The method according to claim 21 or 22, wherein the carbon fiber agglomerate has a length equal to or longer than 20 mm.

24. The method according to any one of claims 1 to 11, wherein
the granular molding material includes a carbon fiber-containing fiber agglomerate, and
the carbon fiber-containing fiber agglomerate is a fiber agglomerate containing carbon fibers, thermoplastic polymer fibers, and a binder.

25. The method according to claim 24, wherein the carbon fiber-containing fiber agglomerate has an elongated shape which may be a shape of a needle, a spindle, or a wire.

26. The method according to claim 25, wherein the carbon fiber-containing fiber agglomerate is curved along a longitudinal direction thereof.

27. The method according to claim 25 or 26, wherein the carbon fiber-containing fiber agglomerate has a length equal to or longer than 20 mm.

28. A method for manufacturing a resin sheet containing carbon fibers, the method comprising:
a first step of continuously supplying a granular molding material containing carbon fibers to a double belt press; and
a second step of forming a sheet by fusing particles included in the granular molding material by the double belt press,
the first step including conveying the granular molding material by a first belt conveyor to a discharge end of the first belt conveyor, the first belt conveyor including a conveyor belt and being provided with an upward slope portion, the conveyor belt having a conveying surface that is an uneven surface.

29. The method according to claim 28, wherein
the conveying surface is an uneven surface including a recess with a bottom surface and a protrusion protruding from the bottom surface, and
when the uneven surface is viewed in a plan view, a proportion of the protrusion in the uneven surface is 50% or less, and preferably 10% or less, in terms of area.

30. The method according to claim 28, wherein the conveyor belt is a spiked lattice.

31. The method according to any one of claims 28 to 30, wherein an amount of the granular molding material that reaches the discharge end of the first belt conveyor per unit time is restricted by an inclination of the upward slope portion being steep.

32. The method according to any one of claims 28 to 31, further comprising scraping off a part of the granular molding material conveyed by the first belt conveyor using a scraper in a middle of or at an upper end of the upward slope portion.

33. The method according to claim 32, wherein
the scraper includes a scraping roller, and
the scraping roller includes
a rotation shaft parallel to a T direction of the first belt conveyor,
a cylinder portion whose central axis is in line with the rotation shaft, and
a plurality of blades disposed on an outer peripheral surface of the cylinder portion, each of the plurality of blades being parallel to the rotation shaft.

34. The method according to any one of claim 28 to 33, further comprising dropping the granular molding material from the discharge end of the first belt conveyor.

35. The method according to any one of claims 28 to 34, wherein a disperser configured to disperse the granular molding material by performing a reciprocating motion or a circular motion is disposed below the discharge end of the first belt conveyor.

36. The method according to claim 35, wherein
the disperser includes a rod, and
the rod performs a reciprocating motion horizontally along a direction orthogonal to a longitudinal direction of the rod.

37. The method according to any one of claims 28 to 36, further comprising dropping the granular molding material from the discharge end of the first belt conveyor onto a second belt conveyor having a T direction same as a T direction of the first belt conveyor and preferably being a horizontal belt conveyor.

38. The method according to claim 37, wherein a belt running speed of the second belt conveyor is lower than a belt running speed of the first belt conveyor.

39. The method according to any one of claims 28 to 38, wherein the granular molding material includes elongate-shaped particles.

40. The method according to claim 39, wherein the elongate-shaped particles have a shape of a strip, a needle, a spindle, or a wire.

41. The method according to claim 39 or 40, wherein the elongated-shaped particles are curved along longitudinal directions thereof.

42. The method according to any one of claims 39 to 41, wherein the elongate-shaped particles have a length equal to or longer than 20 mm.

43. The method according to any one of claim 28 to 38, wherein the granular molding material includes a chopped carbon fiber tow prepreg.

44. The method according to claim 43, wherein the chopped carbon fiber tow prepreg has a shape of a strip.

45. The method according to claim 43 or 44, wherein the chopped carbon fiber tow prepreg is curved along a longitudinal direction thereof.

46. The method according to any one of claims 43 to 45, wherein the chopped carbon fiber tow prepreg has a length equal to or longer than 20 mm.

47. The method according to any one of claims 28 to 38, wherein
the granular molding material includes an impregnated carbon fiber agglomerate, and
the impregnated carbon fiber agglomerate is a carbon fiber agglomerate impregnated with a thermosetting resin matrix.

48. The method according to claim 47, wherein the impregnated carbon fiber agglomerate has an elongated shape which may be a shape of a needle, a spindle, or a wire.

49. The method according to claim 48, wherein the carbon fiber agglomerate is curved along a longitudinal direction thereof.

50. The method according to claim 48 or 49, wherein the carbon fiber agglomerate has a length equal to or longer than 20 mm.

51. The method according to any one of claims 28 to 38, wherein
the granular molding material includes a carbon fiber-containing fiber agglomerate, and
the carbon fiber-containing fiber agglomerate is a fiber agglomerate containing carbon fibers, thermoplastic polymer fibers, and a binder.

52. The method according to claim 51, wherein the carbon fiber-containing fiber agglomerate has an elongated shape which may be a shape of a needle, a spindle, or a wire.

53. The method according to claim 52, wherein the carbon fiber-containing fiber agglomerate is curved along a longitudinal direction thereof.

54. The method according to claim 52 or 53, wherein the carbon fiber-containing fiber agglomerate has a length equal to or longer than 20 mm.

55. A device for manufacturing a resin sheet containing carbon fibers, the device comprising:
a double belt press configured to form a sheet by fusing particles included in a granular molding material containing carbon fibers; and
a first belt conveyor configured to supply the granular molding material to the double belt press, the first belt conveyor including a conveyor belt and being provided with an upward slope portion, the conveyor belt having a conveying surface that is an uneven surface.

56. The device according to claim 55, wherein
the conveying surface is an uneven surface including a recess with a bottom surface and a protrusion protruding from the bottom surface, and
when the uneven surface is viewed in a plan view, a proportion of the protrusion in the uneven surface is 50% or less, and preferably 10% or less, in terms of area.

57. The device according to claim 55, wherein the conveyor belt is a spiked lattice.

58. The device according to any one of claims 55 to 57, wherein an amount of the granular molding material that reaches a discharge end of the first belt conveyor per unit time is restricted by an inclination of the upward slope portion being steep.

59. The device according to any one of claims 55 to 58, further comprising a scraper configured to scrape off a part of the granular molding material conveyed by the first belt conveyor in a middle of or at an upper end of the upward slope portion.

60. The device according to claim 59, wherein
the scraper includes a scraping roller, and
the scraping roller includes
a rotation shaft parallel to a T direction of the first belt conveyor,
a cylinder portion whose central axis is in line with the rotation shaft, and
a plurality of blades disposed on an outer peripheral surface of the cylinder portion, each of the plurality of blades being parallel to the rotation shaft.

61. The device according to any one of claims 55 to 60, wherein a disperser configured to disperse the granular molding material dropping from a discharge end of the first belt conveyor by performing a reciprocating motion or a circular motion is disposed below the discharge end of the first belt conveyor.

62. The device according to claim 61, wherein
the disperser includes a rod, and
the rod performs a reciprocating motion horizontally along a direction orthogonal to a longitudinal direction of the rod.
